# EUROPEAN PATENT APPLICATION

(11) **EP 2 065 710 A2**
(43) Date of publication of application: **03.06.2009**
(21) Application number: 08019685.0
(22) Date of filing: 11.11.2008
(51) Int. Cl.: G01P 1/02, G01P 3/48, G01P 3/487, G01P 3/488

(54) **Rotation detecting device and method for manufacturing the same**

(30) Priority: 28.11.2007 JP 2007307788
(71) Applicant: Aisin Seiki Kabushiki Kaisha, Kariya-shi, Aichi 448-8650 (JP)
(72) Inventor: Tsuda, Mamoru, Kariya-shi Aichi-ken 448-8650 (JP); Kamiya, Akira, Kariya-shi Aichi-ken 448-8650 (JP); Iwase, Eiichiro, Kariya-shi Aichi-ken 448-8650 (JP)
(74) Representative: Kuhnen & Wacker

(57) **Abstract**

A rotation detecting device (1) includes a rotation detecting element (2) detecting rotation speed of a rotating object and including lead terminals (22), a holder (4) integrally molded with an electrode terminal (3) to which the lead terminals (22) of the rotation detecting element (2) are connected, including an opposing surface (40) in opposition to the rotating object and a contact surface (50) on the opposite side of the opposing surface (40), and accommodating the rotation detecting element (2), a cover (7) accommodating the holder (4) and including a bottom face portion (71) in contact with the holder (4) at the contact surface (50) and a peripheral wall portion (73) formed along the periphery of the bottom face portion (71), and a housing (9) molded with resin and accommodating a lateral face (60) of the holder (4) for fixing the holder (4) to the cover (7).

## Description

### FIELD OF THE INVENTION

The present invention relates to a rotation detecting device for detecting rotation speed of a rotating object and a method for manufacturing the same.

### BACKGROUND

Conventional rotation detecting devices disclosed in JP2005-30953A (Paragraph 1 to 5 and 26 to 43) (hereinafter referred to as Patent document 1) and in JP2005-172573A (Paragraph 6 to 9, 14 to 15, and 32 to 34) are known as wheel speed sensors for vehicles. Each of the rotation detecting devices is arranged at an end face of a hub bearing and detects rotation speed of a wheel. Such rotation detecting device includes a rotation speed detecting element (sensing element) such as a hall IC or a MRIC (magnetoresistive IC) assembled in a sensor body made of resin. A known assembling structure for assembling the sensing element to the sensor body is as follows: the sensing element configured as a molded IC is covered with resin so as to be formed as a sensor body. Specifically, the molded IC is molded with the resin so as to be covered therewith by a method of resin molding, thereby integrally molding the sensor body with the molded IC.

In the assembling structure, when the molded IC is integrated with the sensor body during the resin molding, large mechanical and thermal stresses are applied to the molded IC. Accordingly, the molded IC may be damaged during the sensor manufacturing process. A method for manufacturing the rotation detecting device for overcoming such trouble occurring in the sensor manufacturing process is described in Patent document 1. The rotation detecting device includes a sensor body integrally formed with a connector member and a holder member by a single resin molding method. The holder member includes a recessed area having a bottom portion and two sidewalls. A molded IC serving as a sensor IC of the rotation detecting device is press fitted to the recessed area in a state where a detecting surface of the molded IC is exposed at an opening section of the recessed area of the holder member. When the molded IC is press fitted to the sensor body after the above-mentioned resin molding process, mechanical stress is applied to the molded IC. However, such mechanical stress is extremely small, compared to the mechanical stress applied to the molded IC due to the resin molding process. Further, thermal stresses scarcely occur at portions except at press-fitting surfaces. Accordingly, the stress applied to the molded IC during the press-fitting process may be reduced, thereby preventing damage of the molded IC.

Moreover, the rotation detecting device disclosed in Patent document 2 includes a shape adjusting member molded with resin in such a way as to cover the molded IC. The shape adjusting member is molded by means of a hot-melt molding technique. According to Patent document 2, after the molded IC is molded integrally with hot-melt resin, the resulting molded IC is inserted into a housing and resin is inserted into the housing, so that a sensor body is obtained. Accordingly, the molded IC covered with the hot-melt resin is protected from pressure and temperature generated when the sensor body is molded with the resin.

In the rotation detecting device described in Patent document 1, the molded IC is fixed to the sensor body only by press-fitting. Thus, when the sensor body is exposed to temperature changes, a gap may be produced between a pressing-fit surface of the molded IC and a press-fitting surface of the sensor body because of their different liner expansion coefficients and an excessive compressive stress may be applied to the molded IC, resulting in reduction of rigidity of the press-fitting surface of the sensor body. Accordingly, fixation of the molded IC relative to the sensor body may deteriorate and the molded IC may be damaged. In particular, extreme changes from low to high temperatures may frequently occur at a mounting area of a rotation detecting device in a vehicle. Thus, as described above, the rigidity of the press-fitting surface of the sensor body may be reduced, thereby deteriorating the fixation of the molded IC relative to the sensor body and damaging the molded IC.

In the rotation detecting device described in Patent document 2, loads applied to the molded IC are reduced by applying the hot-melt molding technique by which hot-melt resin can be molded under low pressure and low temperature. However, the hot-melt resin has a lower melting point, i.e., softening point than engineering plastic resin used for molding the sensor body. In addition, hardness of the hot-melt resin after being solidified is low, compared to hardness of the engineering plastic resin. Thus, when the sensor body is molded with the engineering plastic resin, the shape adjusting member made of the hot-melt resin may melt. In addition, physical properties of the shape adjusting member may deteriorate due to heat or the shape adjusting member may be deformed under pressure applied when the sensor body is molded. At this time, stress may be applied to the molded IC.

A need thus exists for a rotation detecting device having high reliability and a method for manufacturing the same by surely positioning and fixing a rotation detecting element in the rotation detecting device and conducting resin molding without application of loads to the rotation detecting element.

### SUMMARY OF THE INVENTION

According to an aspect of the present invention, a rotation detecting device includes a rotation detecting element detecting rotation speed of a rotating object and including lead terminals, a holder integrally molded with an electrode terminal to which the lead terminals of the rotation detecting element are connected, including an opposing surface located in opposition to the rotating object and a contact surface located on the opposite side of the opposing surface, and accommodating the rotation detecting element, a cover accommodating the holder and including a bottom face portion in contact with the holder at the contact surface of the holder and a peripheral wall portion formed along the periphery of the bottom face portion, and a housing molded with resin and accommodating a lateral face of the holder that is in contact with the cover and fixing the holder to the cover. The holder includes a first resin filling portion provided with an accommodating portion and a second resin filling portion having a recessed area in the contact surface. The first resin portion is filled with a first resin so as to fix the rotation detecting element. The second resin filling portion is formed inside the holder while being isolated from the first resin filling portion without communicating therewith. The second resin filling portion is filled with a second resin and establishes communication with the housing in a state where the housing is molded with the second resin. The second resin has a higher melting point than the first resin. The accommodating portion has a recessed area in the opposing surface and accommodates the rotation detecting element, the lead terminals of which are connected to the electrode terminal exposed at a bottom portion of the accommodating portion.

Accordingly, the rotation detecting element is accommodated in the accommodating portion formed in the first resin filling portion, thereby being fixed to the accommodating portion with the first resin filled in the first resin filling portion. The holder to which the rotation detecting element is fixed is closely attached to the cover and fixed thereto by the housing molded with the second resin having a higher melting point than the first resin. At this time, the second resin is filled into the second resin filling portion formed inside the holder, so that the holder is firmly fixed to the cover. In addition, the first resin filling portion is isolated from the second resin filling portion. Accordingly, molding pressure of the second resin is not transmitted to the first resin filling portion. Further, high temperatures of the molten second resin are limited. Consequently, the rotation detecting element is surely positioned so as to be fixed in the rotation detecting device. At the same time, resin molding is conducted without application of loads to the rotation detecting element. Thus, the rotation detecting device having high reliability may be provided.

According to the present invention, the first resin is a hot-melt adhesive that melts due to heat and is cooled to be solidified, thereafter having adhesiveness.

Accordingly, the hot-melt adhesive has a lower melting point than general molding resin materials such as engineering plastic resin. In addition, the hot-melt adhesive can be injected under a lower injecting pressure than the engineering plastic resin. Thus, when the hot-melt adhesive is filled in the first resin filling portion in which the rotation detecting element is accommodated, loads accompanied by high temperature and high pressure are not applied to the rotation detecting element. Further, the hot-melt adhesive is hardened at high curing speed and has high adhesiveness, enabling the rotation detecting element to be firmly fixed to the holder.

According to the present invention, the first resin filling portion includes a through-hole penetrating from the bottom portion of the accommodating portion to the contact surface and an expanding portion extending along the contact surface and being filled with the first resin therein, and the through-hole is open into the expanding portion.

Accordingly, the first resin solidified in the expanding portion prevents the first resin filled and solidified in the accommodating portion from being detached from the first resin filling portion toward the direction of the opposing surface. Thus, even when the adhesiveness of the first resin relative to the holder deteriorates due to vibration or impact applied to the adhesive area and the aging variations thereof, the filled first resin that covers the rotation detecting element is not detached from the accommodating portion (first resin filling portion). Consequently, the rotation detecting element is firmly fixed to the holder for a prolonged period.

According to the present invention, the housing is molded with the second resin and surrounds the lateral face of the holder without establishing communication with the through-hole and the expanding portion, and a resin filling inlet used for filling the second resin into the second resin filling portion is formed in the contact surface of the holder while having a recessed area in the contact surface and establishes the communication with the housing in a state where the housing is molded with the second resin.

Accordingly, the first resin filling portion has the recessed area where the through-hole and the expanding portion are included in the contact surface of the holder. Further, the housing communicating with second resin filling portion when being molded is formed so as to partially or wholly surround the lateral face of the holder without communicating with the through-hole and the expanding portion. Accordingly, the first resin filling portion is surely isolated from the second resin filling portion. In addition, the resin filling inlet used for filling the second resin into the second resin filling portion is formed in the contact surface so as to have the recessed area therein. The first resin filing portion is formed in the opposing surface on the opposite of the contact surface so as to have a main recessed area. Thus, the filling inlet for the second resin filling portion is formed on the opposite side of the first resin filling portion, thereby surely isolating the first resin filling portion from the second resin filling portion.

According to the present invention, the holder is in contact with the cover at the contact surface and includes an isolating wall isolating the first resin filling portion from the second resin filling portion.

Accordingly, the second resin filling portion is formed in the contact surface so as to have the recessed area. On the other hand, the first resin filling portion is formed in the opposing surface on the opposite side of the contact surface and includes the through-hole and the expanding portion formed in the contact surface. The isolating wall is formed in the holder, therefore surely separating the first resin filling portion from the second resin filling portion.

According to the present invention, the rotation detecting element includes a molded integrated IC package and the lead terminals that extend from a bottom portion of the molded integrated IC package. The rotation detecting element is accommodated in the accommodating portion in parallel to the opposing surface. The accommodating portion formed in the first resin filling portion includes a locking portion for preventing the molded integrated IC package from shifting toward a direction perpendicular to the opposing surface in the depth direction of the recessed area of the accommodating portion.

Accordingly, when the lead terminals of the rotation detecting element are connected to the electrode terminal, the lead terminals are fixed to the electrode terminal. At this time, each of the lead terminals turns to serve as a torsion bar, therefore lifting up the molded integrated IC package out of the accommodating portion 41 of the holder. However, with such configuration, the locking portion is provided at the holder in order to prevent the molded integrated IC package from shifting toward the direction perpendicular to the opposing surface in the depth direction of the recessed area of the accommodating portion. Consequently, the rotation detecting element is appropriately positioned in the holder.

According to the present invention, the electrode terminal includes first and second electrode terminal members each having a connecting surface to which each of the respective lead terminals is connected and a rear surface located on the opposite side of the connecting surface. The connecting surface is exposed toward the first resin filling portion and the rear surface is exposed toward the second resin filling portion.

Accordingly, the lead terminals of the rotation detecting element are connected to the electrode terminal by welding. In this case, an end portion of a welding tool is required to be placed near the electrode terminal and the lead terminals. The connecting surfaces of the electrode terminal to which the lead terminals are exposed toward the first resin filling portion and the rear surfaces of the connecting surfaces are exposed toward the second resin filling portion, so that the welding tool is placed near the electrode terminal from both directions thereof. Accordingly, the lead terminals are firmly connected to the electrode terminal.

According to an aspect of the present invention, a method for manufacturing a rotation detecting device, which is provided with a rotation detecting element detecting rotation speed of a rotating object and including lead terminals, a holder integrally molded with an electrode terminal to which to the lead terminals of the rotation detecting element are connected, including an opposing surface located in opposition to the rotating object and a contact surface located on the opposite side of the opposing surface, and accommodating the rotation detecting element, a cover accommodating the holder and including a bottom face portion in contact with the holder at the contact surface of the holder and a peripheral wall portion formed along the periphery of the bottom face portion, and a housing molded with resin and accommodating a lateral face of the holder and fixing the holder to the cover, includes a process for setting the electrode terminal in a metal mold and molding the holder integrally with the electrode terminal, a process for inserting the rotation detecting element in a first resin filling portion provided with an accommodating portion that has a recessed area in the opposing surface and accommodating the rotation detecting element, a process for connecting the lead terminals of the rotation detecting element to the electrode terminal exposed at a bottom portion of the accommodating portion, a process for filling a first resin into the first resin filling portion and fixing the rotation detecting element to the first resin filling portion, and a process for molding the housing with a second resin in a state where the holder is in contact with the cover and filling the second resin, a different resin material from the first resin, into a second resin filling portion. The second resin filling portion has a recessed area in the contact surface and is formed inside the holder while being isolated from the first resin filling portion without communicating therewith. The second resin filling portion establishes the communication with the housing in a state where the housing is molded with the second resin.

Accordingly, with the above-mentioned configuration, the rotation detecting element is accommodated in the accommodating portion formed in the first resin filling portion and fixed to the accommodating portion with the first resin filled in the first resin filling portion. The holder to which the rotation detecting element is fixed is closely attached to the cover and fixed thereto by the housing molded with the second resin. In this case, the second resin is filled in the second resin filling portion formed inside the holder, so that the holder is firmly fixed to the cover. A process for filling the first resin into the first resin filling portion is different from a process for filling the second resin into the second resin filling portion and the first resin filling portion is isolated from the second filling portion. Consequently, molding pressure of the second resin being filled to the second resin filling portion is not transmitted to the first resin filling portion when the resin molding of the second resin is conducted. Further, effects of high temperatures of the molten second resin on the first resin filling portion are minimized. Thus, the rotation detecting element is surely positioned in the holder at the same time as the resin molding is conducted without application of high loads to the rotation detecting element, so that the rotation detecting device having high reliability may be manufactured.

### BRIEF DESCRIPTION OF THE DRAWINGS

The foregoing and additional features and characteristics of the present invention will become more apparent from the following detailed description considered with reference to the accompanying figures, wherein:

Fig. 1 is a perspective view illustrating an outer appearance of a rotation detecting device according to an embodiment of the present invention;

Fig. 2 is a perspective view illustrating an outer appearance of an electrode terminal;

Fig. 3 is a perspective view illustrating a holder integrally molded with the electrode terminal of Fig. 2;

Fig. 4 is a perspective view illustrating a condition where a rotation detecting element is accommodated in the holder of Fig. 3;

Fig. 5 is a perspective view illustrating a condition where the electric terminal is fixed with a first resin filled in the holder of Fig. 4;

Fig. 6 is an exploded perspective view describing how the holder of Fig. 5 and a connector are attached to a cover;

Fig. 7 is a perspective view illustrating the cover of Fig. 6 seen from the direction of the connector after the holder and the connector are attached to the cover;

Fig. 8 is a perspective view of the cover of Fig. 6 seen from the direction of the holder after the holder and the connector are attached to the cover;

Fig. 9 is a top view of the holder seen from the direction of an opposing surface of the holder;

Fig. 10 is a bottom view illustrating the holder seen from the direction of a contact surface of the holder;

Fig. 11 is a cross-sectional view taken along line XI-XI of Fig. 9;

Fig. 12 is a cross-sectional view taken along line XII-XII of Fig. 9;

Fig. 13 is a top view illustrating a condition where the first resin is filled in the holder;

Fig. 14 is a perspective bottom view illustrating a condition where the first resin is filled in the holder;

Fig. 15 is a cross-sectional view taken along XV-XV of Fig. 13; and

Fig. 16 is a cross-sectional view taken along XVI-XVI of Fig. 13.

### DETAILED DESCRIPTION

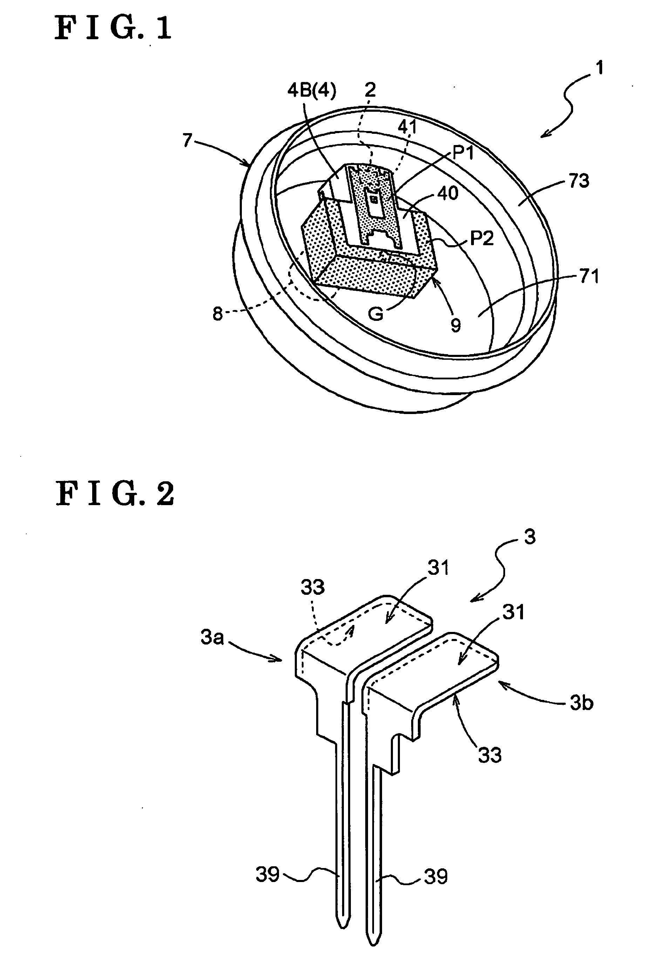

An embodiment of the present invention of a rotation detecting device 1 applied, for example, as a vehicle wheel speed sensor, will be explained with reference to the illustrations of the figures as follows. Fig. 1 is a perspective view illustrating an outer appearance of the rotation detecting device 1. The rotation detecting device 1 is arranged at an end face of a hub bearing of a driven wheel for a vehicle and detects rotation speed of the driven wheel as a rotating object. As illustrated in Fig. 1, the rotation detecting device 1 includes a holder assembly 4B obtained by a holder 4 accommodating a rotation detecting element 2, a cover 7 accommodating the holder assembly 4B, a connector 8, and a housing 9 fixing the holder assembly 4 and the connector 8 to the cover 7.

The rotation detecting element 2 detecting the rotation speed of the rotating object is a sensor IC such as a hall IC or a MRIC (magnetoresistive IC), which is an IC configured by integrating a circuit for supplying current and voltage to sensing elements and a circuit for processing output of the sensing elements. The sensor IC includes a sensing element outputting an electric signal in response to a physical quantity varying according to the rotation speed of the rotating object, a signal processing circuit processing the signal output from the sensing element and outputting the processed signal, and other elements. In the rotation detecting device 1 according to the embodiment, the rotation detecting element 2 has two lead terminals 22 extending from a bottom portion of a molded integrated IC package 21. The molded integrated IC package 21 is configured by integrating the sensing element and the signal processing circuit.

The holder assembly 4B is a sub-assembly including the rotation detecting element 2 accommodated in the holder 4 integrated with a conductive electrode terminal 3 that is connected with the lead terminals 22 of the rotation detecting element 2 as will be described below. The rotation detecting element 2 is accommodated in an accommodating portion 41 formed in the holder 4 so as to be fixed thereto with a first resin P1 being filled in the accommodating portion 41 as will be described below.

The cover 7 is attached to the end face of the hub bearing and serves as an enclosure for the rotation detecting device 1 so as to accommodate the holder assembly 4B. The cover 7 serves as an enclosure of the rotation detecting device 1 as well as an attaching member. The cover 7 includes a bottom face portion 71 and a peripheral wall portion 73. The bottom face portion 71 is in contact with the holder 4 (holder assembly 4B) in a state where the holder 4 is attached to the cover 7. At the same time, the bottom face portion 71 of the cover 7 is in contact with a contact surface 50 of the holder 4 located at the opposite side of an opposing surface 40 of the holder 4 located in opposition to the rotating object. The peripheral wall portion 73 is formed along the periphery of the bottom face portion 71 of the cover 7.

The holder assembly 4B and the connector 8 are press fitted to the cover 7 so as to sandwich the cover 7 therebetween. End portions (connector terminal portions 39) of the electrode terminal 3 integrated with the holder 4 are inserted into the connector 8 so as to extend therein. A cable (not shown) transmitting a signal output from the rotation detecting element 2 according to the rotation speed of the rotating object to a control device such as an ECU (electronic control unit) for a vehicle, is connected to the connector 8. The cable is fitted to the connector terminal portions 39 of the electrode terminal 3 inserted into the connector 8 to extend therein. The signal output from the rotation detecting element 2 is transmitted through the cable to the control device.

The housing 9 is molded with resin so as to partially or wholly surround a lateral face 60 of the holder assembly 4B (holder 4) closely attached to the cover 7, thereby integrally fixing the holder assembly 4B and the connector 8 to the cover 7. The housing 9 is molded with a second resin P2 that is a molding resin material having a higher melting point than the first resin P1 filled in the accommodating portion 41 formed in the holder 4. As will hereinafter be described in detail, the first resin P1 and the second resin P2 are isolated from each other as illustrated in Fig. 1.

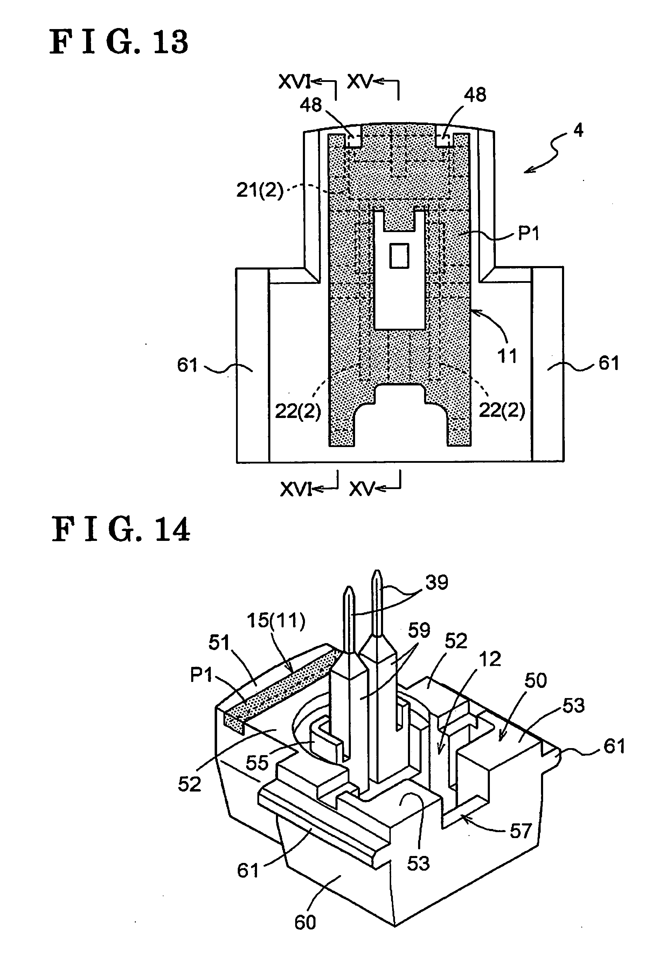

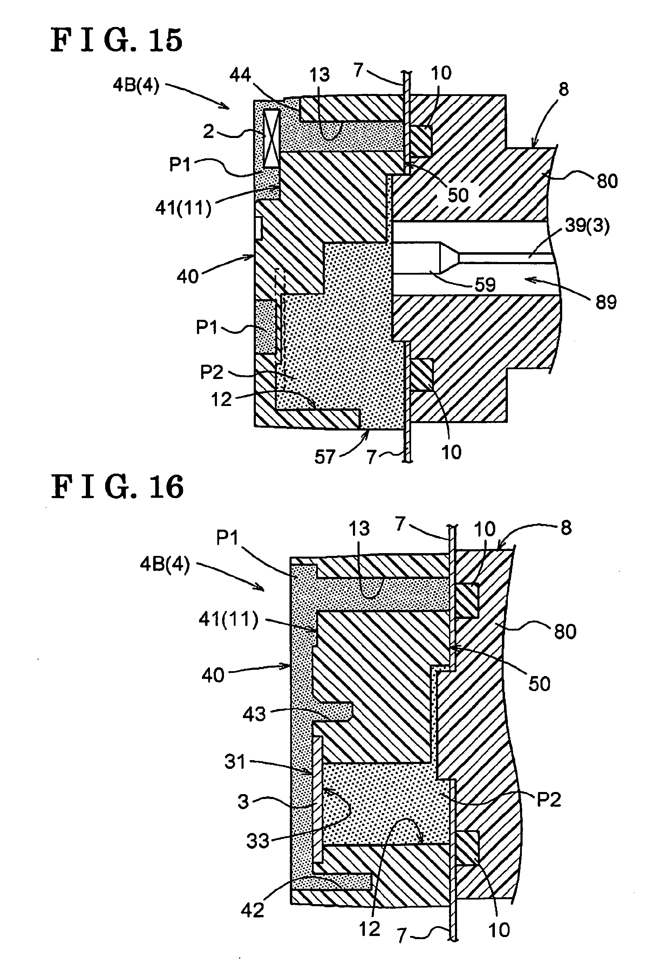

A method for manufacturing the rotation detecting device 1 will be described with reference to the illustrations of Figs. 2 to 8 in addition to Fig. 1 as follows. Additionally, Fig. 13 is a top view of the holder assembly 4B seen from the direction of the opposing surface 40 of the holder 4 and Fig. 14 is a perspective view of the holder assembly 4B seen from the direction of the contact surface 50 of the holder 4. Fig. 15 and Fig. 16 illustrate a condition of the holder 4 attached to the cover 7 together with the connector 8 and filled with the second resin P2 when the housing 9 is molded. In addition, the housing 9 is not illustrated in Fig. 15 5 and Fig. 16 because both are cross-sectional views of Fig. 13.

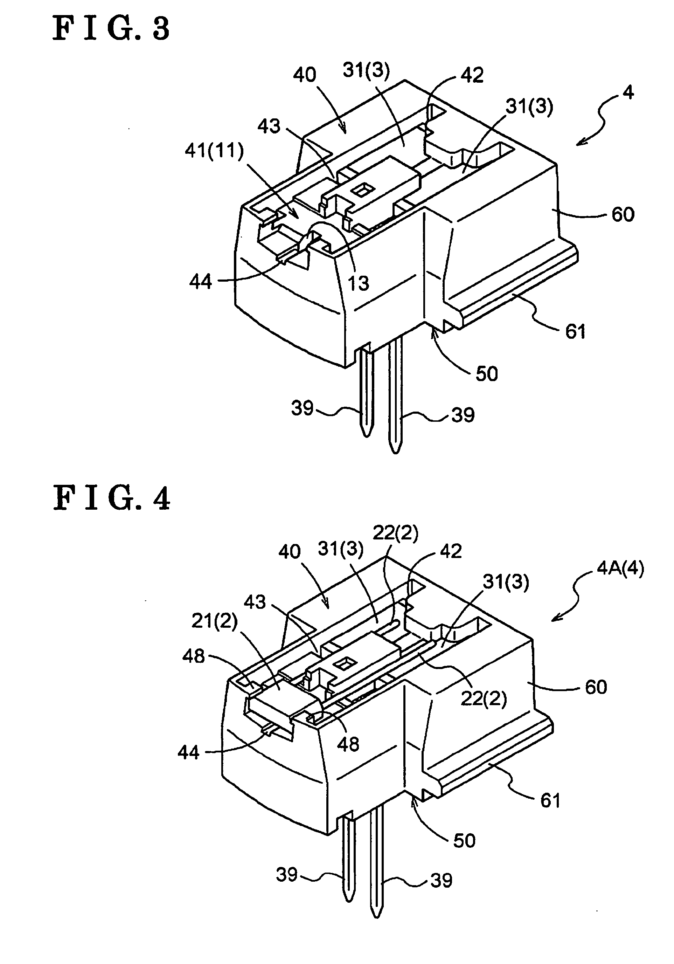

As illustrated in Fig. 2, the electrode terminal 3 is made of a conductive material such as metal and serves as an electrode to which the lead terminals 22 (refer to Fig. 4) of the rotation detecting element 2 are connected. The electrode terminal 3 includes first and second electrode members 3a and 3b formed of a pair of symmetrical shapes. Each of the first and second electrode members 3a and 3b has a rectangular flat face portion (connecting surface 31) and the connector terminal portion 39 as seen in Fig. 2. The respective lead terminals 22 of the rotation detected element 2 are applied to the first and second electrode members 3a and 3b so as to be fixed thereto. Each of the connector terminal portions 39 of the electrode terminal 3 is bent at a substantially right angle relative to the connecting surface 31 and has a needle shape extending downwardly from the connecting surface 31 and being gradually thinner toward the end as seen Fig. 2. When the rotation detecting device 1 is manufactured, the electrode members 3a and 3b are set in a metal mold used for molding the holder 4 and engineering plastic resin is inserted into the metal mold (a first manufacturing process). Accordingly, the holder 4 is molded with the engineering plastic resin so as to be integrated with the electrode members 3a and 3b (insert molding).

The holder 4 integrally molded with the electrode terminal 3 according to the first manufacturing processs is illustrated in Fig. 3. As illustrated in Fig. 3, a first resin filling portion 11 is formed in the holder 4. The first resin filling portion 11 includes the accommodating portion 41 having a recessed area in the opposing surface 40 for accommodating the rotation detecting element 2. The rotation detecting element 2 is inserted in the accommodating portion 41 of the first resin filling portion 11 so as to be accommodated therein (a second manufacturing process).

Fig. 4 illustrates of the holder 4 in which the rotation detecting element 2 accommodated according to the second manufacturing process. As illustrated in Fig. 4, the rotation detecting element 2 (i.e. a radial part) in the embodiment has the lead terminals 22 extending from the bottom portion of the molded integrated IC package 21. The rotation detecting element 2 is accommodated in the accommodating portion 41 approximately in parallel to the opposing surface 40 by making a flat surface of the molded integrated IC package 21 contact with a flat surface of the recessed area of the accommodating portion 41. Locking portions 48 are formed at the accommodating portion 41. The locking portions 48 prevent the molded integrated IC package 21 from shifting toward a direction perpendicular to the opposing surface 40 in the depth direction of the recessed area of the accommodating portion 41. Accordingly, the molded integrated IC package 21 is locked by the locking portions 48 so as to be held in a fixed location in the accommodating portion 41.

The holder 4 is integrally molded with the electrode terminal 3 in a state where the connecting surfaces 31 of the electrode terminal 3 are exposed at a bottom portion of the accommodating portion 41. In a state where the rotation detecting element 2 is accommodated in the accommodating portion 41, the lead terminals 22 of the rotation detecting element 2 are positioned to the respective connecting surfaces 31 of the electrode terminal 3. The lead terminals 22 are connected to the electrode members 3a and 3b of the electrode terminal 3, so that the holder 4 is completed as a holder assembly 4A (a third manufacturing process).

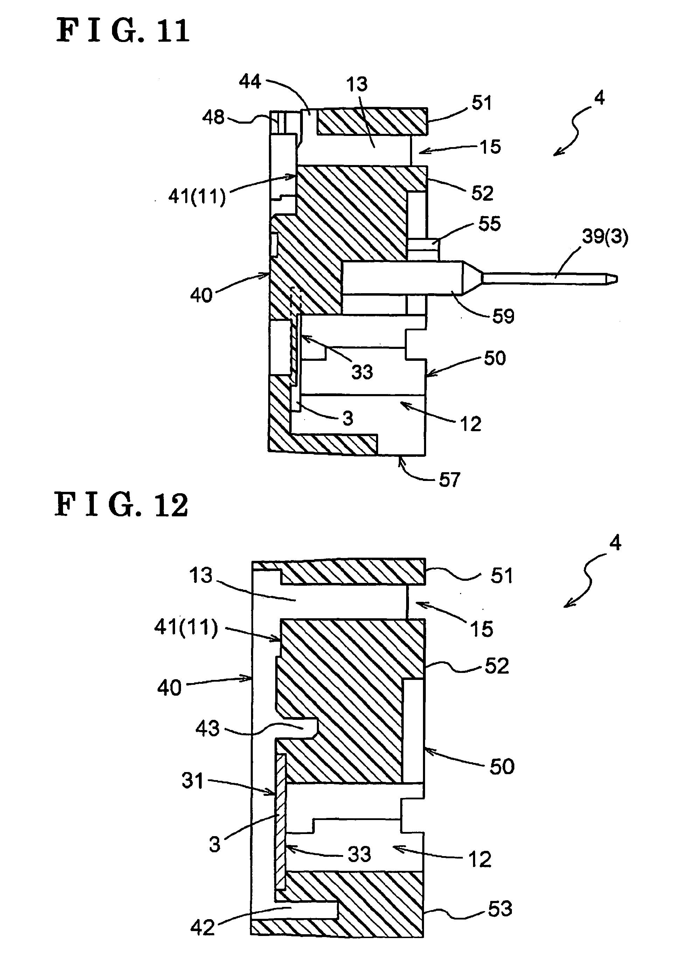

In particular, the molded integrated IC package 21 is positioned relative to the holder 4 by using a positioning tool. The lead terminals 22 of the rotation detecting element 2 are connected to the electrode terminal 3 by means of a resistance welding method. As illustrated in Fig. 12, the electrode terminal 3 is integrally molded with the holder 4 in such a way that the connecting surfaces 31 to which the lead terminals 22 of the rotation detecting element 2 are connected are exposed toward the first resin filling portion 11 and that rear surfaces 33 of the connecting surfaces 31 are exposed toward a second resin filling portion 12 formed in the contact surface 50 of the holder 4. During a welding process, a tip of a welding electrode of a welder is required to be placed near the electrode terminal 3 and the lead terminals 22. In the embodiment, the connecting surfaces 31 and the rear surfaces 33 are exposed at an inner part of the holder 4. Accordingly, the tip of the welding electrode is placed near the connecting surfaces 31 and the rear surfaces 33 from both directions thereof.

In a state where the rotation detecting element 2 is accommodated in the accommodating portion 41, the lead terminals 22 are not closely attached to the connecting surfaces 31 of the electrode terminal 3. Accordingly, when the lead terminals 22 are welded to the electrode terminal 3, each of the metallic lead terminals 22 turns to serve as a torsion bar and the molded integrated IC package 21 of the rotation detecting element 2 may be lifted up promptly out of the accommodating portion 41 at a welding portion of each of the lead terminals 22 at the time of the welding process. Consequently, the locking portions 48 are formed at the holder 4 in order to prevent the molded integrated IC package 21 from being lifted up out of the accommodating portion 41 of the holder 4 as illustrated in Fig. 4.

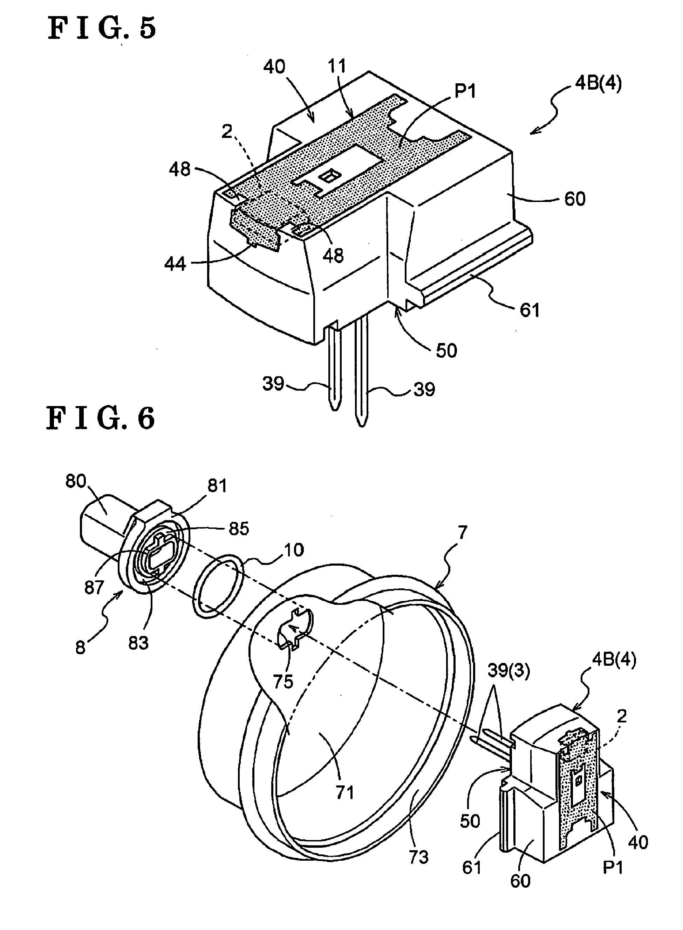

After the rotation detecting element 2 is accommodated in the accommodating portion 41 and the lead terminals 22 are connected to the connecting surfaces 31 of the electrode terminal 3, the rotation detecting element 2 is fixed to the accommodating portion 41 of the holder 4 with the first resin P1. As illustrated in Fig. 5 and Fig. 13, the first resin P1 is filled in the first resin filling portion 11. Accordingly, the rotation detecting element 2 is fixed to the holder 4 (a fourth manufacturing process). Consequently, the rotation detecting element 2 is assembled to the holder 4, so that the holder assembly 4B is obtained.

A metal mold is closely attached to the contact surface 50 being in contact with the cover 7 and the holder 4 is fixed relative to the metal mold by means of a mold clamping method. Afterwards, the first resin P1 is inserted into the first resin filling portion 11. When the holder 4 is firmly fixed to the metal mold, an impact occurs. The rotation detecting element 2 may be lifted up out of the accommodating portion 41 due to the impact. Accordingly, the rotation detecting element 2 may be damaged and the position thereof in the accommodating portion 41 may be dislocated. However, as described above, the locking portions 48 prevent the rotation detecting element 2 from shifting and being lifted up out of the accommodating portion 41. Consequently, possibilities of occurrence of the above events may be significantly reduced.

In addition, the first resin P1 is hot-melt resin in the embodiment, which melts due to heat and is cooled to be solidified. Accordingly, the hot-melt resin has adhesiveness relative to the holder 4 and the molded integrated IC package 21. It is appropriate to apply the holt-melt resin, for example, having the following composition.

**Table 1**

| | Softening point | Melt viscosity | Glass transition point |
|---|---|---|---|
| Polyamide hot- | 195 degrees Celsius | 4400 mPa•s | -56.6 degrees Celsius |
| melt adhesive | | (220 degrees Celsius) | |
| Polyamide hot- | 180 degrees Celsius | 2500 mPa•s | -40.0 degrees Celsius |
| melt adhesive | | (220 degrees Celsius) | |
| Polyester hot- | 190 degrees Celsius | 70000 mPa•s | -65.0 degrees Celsius |
| melt adhesive | | (200 degrees Celsius) | |

| | | | |
|---|---|---|---|
| "m" in the melt viscosity column of Table 1 indicates millimeter. | | | |

The rotation detecting device 1 according to the embodiment is arranged at the end face of the hub bearing for the vehicle and detects rotation speed of a wheel. An ambient operating high temperature limit is estimated up to 150 degrees Celsius. Accordingly, as shown in Table 1, it is appropriate to apply hot-melt adhesives each having a softening point of 180 degrees Celsius or more. Moreover, in consideration of efficiency when hot-melt adhesive is injected in a mass-production line, an appropriate melt viscosity is 70000 mPa•s or less at 200 degrees Celsius. Further, in consideration of an ambient storage low temperature limit, an appropriate glass transition point may be below -40 degrees Celsius. Polyolefin hot-melt adhesives, softening point of which is 180 degrees Celsius or less may be used other than those mentioned above. However, the polyolefin hot-melt adhesives are not appropriate in the embodiment because of their grade lower than the above-mentioned three types of hot-melt adhesives. However, when an ambient operating high temperature limit is low in comparison with the embodiment, the polyolefin hot-melt adhesives may be applied to a rotation detecting device for other use.

As easily understood from Table 1, hot-melt adhesive has a low melting point, a low viscosity, and a low viscosity, compared to general molding resin materials such as engineering plastic resin. Accordingly, the hot-melt adhesive is a resin material, which can be injected under low injection pressure. Consequently, molten resin is filled into the first resin filling portion 11 in which the rotation detecting element 2 is accommodated, loads accompanied by high temperatures and high pressures may not be applied to the rotation detecting element 2. In addition, the hot-melt adhesive is hardened at high curing speed and has high adhesiveness to many types of engineering plastic resins, therefore establishing an appropriate fixation of the rotation detecting element 2 relative to the holder 4.

In the embodiment, the first resin P1 is filled in the first resin filling portion 11 so as to have a recessed shape in the opposing surface 40 when being solidified. That is, a volume slightly smaller than the inner volume of the first resin filling portion 11 formed in the holder 4 is filled into the first resin filling portion 11 in order to reduce changes in pressures applied to the holder 4 and the molded integrated IC package 21 when the first resin P1 expands and contracts due to changes in temperatures and to prevent the solidified first resin P1 from being detached from the accommodating portion 41 of the holder 4. In addition, the volume of the first resin P1 being filled into the first resin filling portion 11 is reduced, resulting in cost reduction.

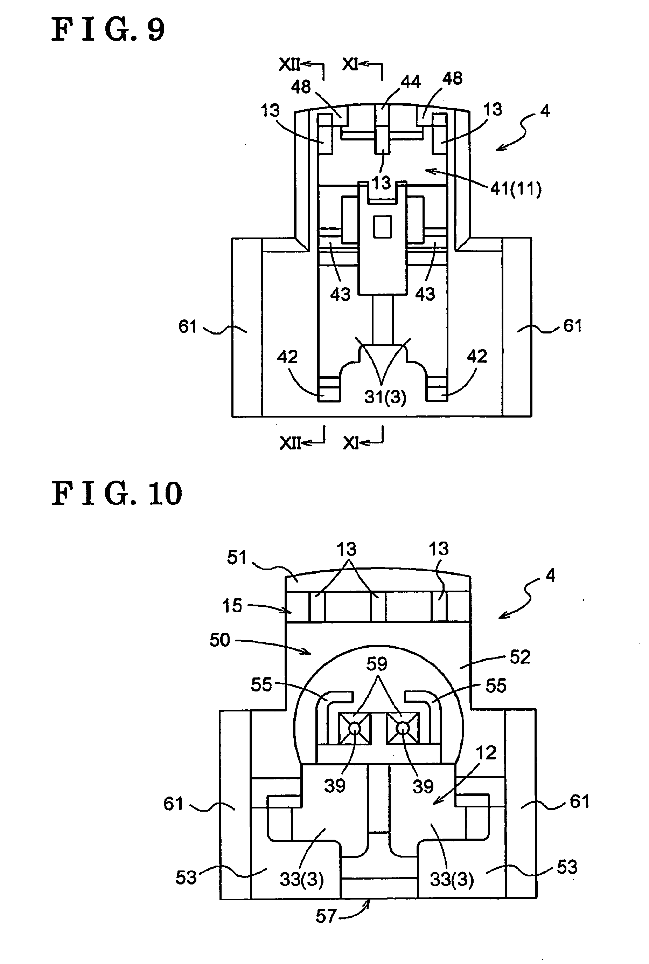

As illustrated in Fig. 9, Fig. 11, and Fig. 12, a plurality of recessed portions 42, 43, and 44 are formed at the bottom portion of the accommodating portion 41. When the first resin P1 is filled in the accommodating portion 41, the recessed portions 42, 43, and 44 are filled with the first resin P1, thereby increasing a contact area of the first resin P1 with the holder 4. Although the hot-melt adhesive as the first resin P1 has high adhesiveness, adhesiveness between the holder 4 and the first resin P1 is further increased by increasing the contact area therebetween. By reference to Fig. 15 and Fig. 16 each illustrating the cross-sectional view of the holder 4 after the first resin P1 is filled in the accommodating portion 41, the first resin P1 is filled in the recessed portions 42, 43, and 44, thereby increasing the contact area of the first resin P1 with the holder 4.

The accommodating portion 41 is formed in the opposing surface 40 and located at an opening section of the rotation detecting device 1 after the holder 4 is attached to the cover 7. Accordingly, when the adhesiveness between the holder 4 and the first resin P1 deteriorates due to aging variations of the adhesive area resulting from changes in temperatures, vibration, or impact for a prolonged period of time, the first resin P1 may be detached from the accommodating portion 41 while remaining in a solidified substance. At this time, the rotation detecting element 2 may be detached from the accommodating portion 41 together with the first resin P1 and be dislocated because the rotation detecting element 2 is molded with the first resin P1. Accordingly, the recessed portions 42, 43, and 44 are formed in the holder 4 in order to strengthen the adhesiveness between the holder 4 and the first resin P1.

Furthermore, the holder 4 includes the following structure as described below in order to prevent the solidified first resin P1 from being detached from and dropping out of the holder 4. As illustrated in Fig. 3, Fig. 4, and Figs. 9 to 12, the first resin filling portion 11 includes a plurality of through-holes 13 penetrating from the bottom portion of the accommodating portion 41 to the contact surface 50. Although at least one through-hole is sufficient, a plurality of through-holes are appropriate because the through-holes 13 enable the first resin P1 to flow quickly therethrough and because adhesiveness after the first resin P1 is solidified increases. As illustrated in Fig. 9 and Fig. 10, the through-holes 13 are formed at three locations in the holder 4 according to the embodiment. Furthermore, the first resin filling portion 11 includes an expanding portion 15 extending along the contact surface 50 while opening into the contact surface 50. The through-holes 13 are open into the expanding portion 15 where the first resin P1 is expanded in the contact surface 50. As illustrated in Fig. 14, the first resin P1 filled into the accommodating portion 41 is expanded and filled in the contact surface 50 by the expanding portion 15.

The width of the first resin P1 solidified in the expanding portion 15 is larger than a total width of the through-holes 13, thereby preventing the first resin P1 filled and solidified in the accommodating portion 41 having the recessed area in the opposing surface 40 from being detached from the accommodating portion 41 toward the direction of the opposing surface 40. Thus, even when the adhesiveness of the first resin P1 relative to the holder 4 deteriorates due to vibration or impact applied to the adhesive area and aging variations thereof, the filled first resin P1 that is covering the rotation detecting element 2 is not detached from the accommodating portion 41 (first resin filling portion 11).

As described above, the rotation detecting element 2 is appropriately positioned relative to the holder 4 according to the first, second, third, and fourth manufacturing processes, thereby obtaining the holder assembly 4B that is the sub-assembly having the rotation detecting element 2 firmly fixed in the holder 4. A fifth manufacturing process of the rotation detecting device 1 will be described below.

As illustrated in Fig. 6, the holder assembly 4B and the connector 8 are connected to the cover 7 at the beginning of the fifth manufacturing process. The connector 8 is configured so as to include contact portions 81 and 85 and a fitting portion 87 formed at an end of a tubular body 80. The contact portions 81 and 85 are in contact with the case 7 and the fitting portion 87 is in contact with the holder 4 (4B) when the holder assembly 4B and the connector 8 are connected to the cover 7. The contact portions 81 and 85 are formed coaxially to each other. An annular groove portion 83 is formed between the contact portions 81 and 85. An O-ring 10 is assembled in the groove portion 83, thereby preventing water from intruding into an interior part of the cover 7 via a contact area between the connector 8 and the cover 7.

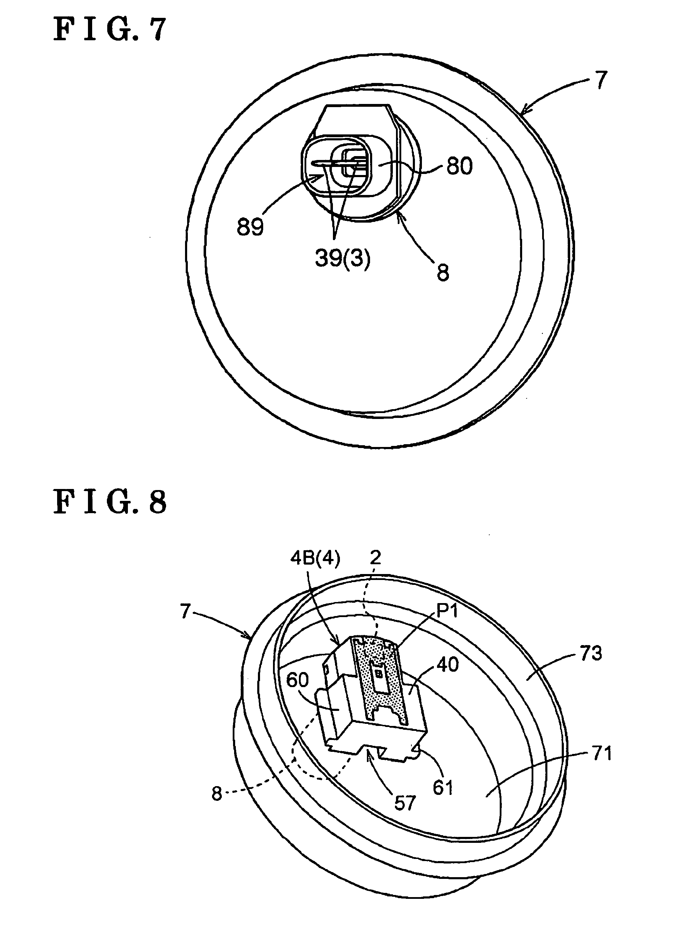

The fitting portion 87 located more inwardly than the groove portion 83 to the center is formed on the contact portion 85 and extrudes toward the holder assembly 4B. The fitting portion 87 fits fitting portions 55 of the holder 4 through a connecting hole 75 formed in the bottom face portion 71 of the cover 7 (refer to Fig. 10 and Fig. 14). The holder assembly 4B and the connector 8 are press fitted to the cover 7 so as to sandwich the cover 7 therebetween. As illustrated in Fig. 7, the end portions (connector terminal portions 39) of the electrode terminal 3 integrated with the holder 4 are inserted into the body 80 of the connector 8 so as to extend therein.

As described above, in a state where the holder 4 (holder assembly 4B) is in contact with the cover 7, the housing 9 is molded with the second resin P2 having a higher melting point than the first resin P1, so that the rotation detecting device 1 as illustrated in Fig. 1 is obtained. The second resin P2 is a molding resin material such as engineering plastic resin. The housing 9 is molded with the second resin P2 so as to partially or wholly surround the lateral face 60 of the holder assembly 4B (holder 4) that is in contact with the cover 7, thereby integrally fixing the holder assembly 4B and the connector 8 to the cover 7. Thus, a final outer shape of the rotation detecting device 1 is completed, so that the completed rotation detecting device 1 is obtained. As illustrated in Fig. 3, Fig. 8, and the like, flared portions 61 are provided at the lateral face 60 of the holder 4 around which the housing 9 is molded with the second resin P2. Accordingly, a contact area of the second resin P2 with the holder 4 is increased.

As illustrated in Figs. 10 to 12 and Figs. 14 to 16, the second resin filling portion 12 is formed inside the holder 4. In addition to the above, as illustrated in Fig. 8, a resin filling inlet 57 used for filling the second resin P2 into the holder 4 (second resin filling potion 12) is formed in the contact surface 50 of the holder 4 so as to have a recessed area therein. The resin filling inlet 57 establishes communication with the housing 9 in a state where the housing 9 is molded with the second resin P2. That is, the second resin filling portion 12 is a space formed inside the holder 4 while being isolated from the first resin filling portion 11 without communicating therewith (refer to Fig. 14).

When the housing 9 is molded with resin, the second resin P2 is filled into the second resin filling portion 12 through the resin filling inlet 57 establishing the communication with the housing 9 in a state where the housing 9 is molded. At this time, a position G indicated in Fig. 1 is a suitable location being established as a gate of a metal mold used for molding the housing 9, i.e., an injection hole of the second resin filling portion 12. Thus, the second resin P2 is filled into the second resin filling portion 12 through the resin filling inlet 57. Moreover, as clearly understood from Fig. 1, the position G of the gate is located planimetrically furthest from the molded integrated IC package 21 of the rotation detecting element 2. Accordingly, the rotation detecting element 2 is prevented from being affected by pressure or heat generated when the molten second resin P2 is filled into the second resin filling portion 12.

As illustrated in Fig. 15 and Fig. 16, the first resin filling portion 11 is mainly formed in the opposing surface 40 of the holder 4 while the second resin filling portion 12 is formed in the contact surface 50 of the holder 4. Accordingly, the first resin filling portion 11 and the second resin filling portion 12 are formed in the holder 4 so as to be isolated from each other. Consequently, even when the second resin P2 having a high melting temperature and requiring a high injection pressure is filled into the second resin filling portion 12, effects of such high temperature and pressure on the first resin P1 filled in the first resin filling portion 11 are minimized.

Meanwhile, the first resin P1 filled in the first resin filling portion 11 may be detached from the holder 4 because the first resin P1 filled in the accommodating portion 41 is not newly molded with the second resin P2. However, as described above, the through-holes 13 and the expanding portion 15 for increasing the adhesiveness of the first resin P1 and preventing the solidified first resin P1 from being detached from the accommodating portion 41 are provided in the holder 4 according to the embodiment. Consequently, the first resin P1 is prevented from being detached from the accommodating portion 41 of the holder 4 and the rotation detecting element 2 is firmly fixed to the holder 4.

Further, the through-holes 13 and the expanding portion 15 are provided in the contact surface 50 in which the second resin filling portion 12 has a recessed area, so that the first resin filling portion 11 opens into the contact surface 50. However, as illustrated in Fig. 11, Fig. 12, and Fig. 14, an isolating wall 52 is formed in the holder 4 so as to contact the cover 7 at the contact surface 50. The isolating wall 52 separates the first resin filling portion 11 from the second resin filling portion 12. Accordingly, the first resin P1 filled in the first resin filling portion 11 is surely isolated from the second resin P2 filled in the second resin filling portion 12.

As described above, according to the embodiment, the rotation detecting element 2 is surely positioned in the holder 4 so as to be firmly fixed thereto at the same time as the housing 9 is molded with the second resin P2 without application of loads to the rotation detecting element 2. Thus, the rotation detecting device 1 having high reliability may be provided. The rotation detecting device 1 according to the embodiment is especially suitable as a rotation detecting device attached at an end face of a hub bearing for use when being accommodated within a cover member. Generally, environmental resistance of hot-melt adhesive is not higher than engineering plastic resin. However, in the case of the rotation detecting device for use when being accommodated within the cover member, the environmental resistance of the hot-melt adhesive may be redeemed by the cover member.

## Claims

1. A rotation detecting device (1), comprising:
a rotation detecting element (2) detecting rotation speed of a rotating object and including lead terminals (22);
a holder (4) integrally molded with an electrode terminal (3) to which the lead terminals (22) of the rotation detecting element (2) are connected, including an opposing surface (40) located in opposition to the rotating object and a contact surface (50) located on the opposite side of the opposing surface (40), and accommodating the rotation detecting element (2);
a cover (7) including a bottom face portion (71) in contact with the holder (4) at the contact surface (50) of the holder (4) and a peripheral wall portion (73) formed along the periphery of the bottom face portion (71), the cover accommodating the holder (4); and
a housing (9) molded with resin, accommodating a lateral face (60) of the holder (4) that is in contact with the cover (7), and fixing the holder (4) to the cover (7);
the holder (4) including a first resin filling portion (11) provided with an accommodating portion (41) and a second resin filling portion (12) having a recessed area in the contact surface (50), the first resin portion (11) filled with a first resin (P1) and fixing the rotation detecting element (2), the second resin filling portion (12) formed inside the holder (4) while being isolated from the first resin filling portion (11) without communicating with the first resin portion (11), the second resin filling portion (12) filled with a second resin (P2) and establishing communication with the housing (9) in a state where the housing (9) is molded with the second resin (P2), the second resin (2) having a higher melting point than the first resin (P1), the accommodating portion (41) having a recessed area in the opposing surface (40) and accommodating the rotation detecting element (2), the lead terminals (22) of which are connected to the electrode terminal (3) exposed at a bottom portion of the accommodating portion (41).

2. The rotation detecting device (1) according to Claim 1, wherein the first resin (P1) is a hot-melt adhesive that melts due to heat and is cooled to be solidified, thereafter having adhesiveness.

3. The rotation detecting device (1) according to Claim 1, wherein the first resin filling portion (11) includes a through-hole (13) penetrating from the bottom portion of the accommodating portion (41) to the contact surface (50) and an expanding portion (15) extending along the contact surface (50) and being filled with the first resin (P1) therein, and the through-hole (13) is open into the expanding portion (15).

4. The rotation detecting device (1) according to Claim 3, wherein the housing (9) is molded with the second resin (P2) and surrounds the lateral face (60) of the holder (4) without establishing communication with the through-hole (13) and the expanding portion (15), and a resin filling inlet (57) used for filling the second resin (P2) into the second resin filling portion (12) is formed in the contact surface (50) of the holder (4) while having a recessed area in the contact surface (50) and establishes communication with the housing (9) in a state where the housing (9) is molded with the second resin (P2).

5. The rotation detecting device (1) according to Claim 3, wherein the holder (4) is in contact with the cover (7) at the contact surface (50) and includes an isolating wall (52) isolating the first resin filling portion (11) from the second resin filling portion (12).

6. The rotation detecting device (1) according to Claim 1, wherein the rotation detecting element (2) includes a molded integrated IC package (21) and the lead terminals (22) that extend from a bottom portion of the molded integrated IC package (21), the rotation detecting element (2) is accommodated in the accommodating portion (41) in parallel to the opposing surface (40), and the accommodating portion (41) formed in the first resin filling portion (11) includes a locking portion (48) for preventing the molded integrated IC package (21) from shifting toward a direction perpendicular to the opposing surface (40) in the depth direction of the recessed area of the accommodating portion (41).

7. The rotation detecting device (1) according to Claim 1, wherein the electrode terminal (3) includes first and second electrode terminal members (3 a and 3b) each having a connecting surface (31) to which each of the respective lead terminals (22) is connected and a rear surface (33) located on the opposite side of the connecting surface (31), and the connecting surface (31) is exposed toward the first resin filling portion (11) and the rear surface (33) is exposed toward the second resin filling portion (12).

8. A method for manufacturing a rotation detecting device (1), the rotation detecting device
(1) including a rotation detecting element (2) detecting rotation speed of a rotating object and including lead terminals (22), a holder (4) integrally molded with an electrode terminal (3) to which to the lead terminals (22) of the rotation detecting element (2) are connected, including an opposing surface (40) located in opposition to the rotating object and a contact surface (50) located on the opposite side of the opposing surface (40), and accommodating the rotation detecting element (2), a cover (7) accommodating the holder
(4) and including a bottom face portion (71) in contact with the holder (4) at the contact surface (50) of the holder (4) and a peripheral wall portion (73) formed along the periphery of the bottom face portion (71), and a housing (9) molded with resin, accommodating a lateral face (60) of the holder (4), and fixing the holder (4) to the cover (7), the method comprising:
a process for setting the electrode terminal (3) in a metal mold and molding the holder (4) integrally with the electrode terminal (3);
a process for inserting the rotation detecting element (2) in a first resin filling portion (11) provided with an accommodating portion (41) that has a recessed area in the opposing surface (40) and accommodating the rotation detecting element (2);
a process for connecting the lead terminals (22) of the rotation detecting element (2) to the electrode terminal (3) exposed at a bottom portion of the accommodating portion (41);
a process for filling a first resin (P1) into the first resin filling portion (11) and fixing the rotation detecting element (2) to the first resin filling portion (11); and
a process for molding the housing (9) with a second resin (P2) in a state where the holder (4) is in contact with the cover (7) and filling the second resin (P2), a different resin material from the first resin (P1), into a second resin filling portion (12), the second resin filling portion (12) having a recessed area in the contact surface (50) and formed inside the holder (4) while being isolated from the first resin filling portion (11) without communicating therewith, the second resin filling portion (12) establishing communication with the housing (9) in a state where the housing (9) is molded with the second resin (P2).
